# EUROPÄISCHE PATENTSCHRIFT

(11) **EP 1 305 766 B1**
(45) Veröffentlichungstag und Bekanntmachung des Hinweises auf die Patenterteilung: **11.01.2006**
(21) Anmeldenummer: 01964872.4
(22) Anmeldetag: 31.07.2001
(51) Int. Cl.: G06K 7/00

(54) **GERÄT MIT CHIPKARTE**
DEVICE COMPRISING A CHIP CARD
DISPOSITIF A CARTE A PUCE

(30) Priorität: 02.08.2000 DE 10037744
(43) Veröffentlichungstag der Anmeldung: 02.05.2003
(73) Patentinhaber: SIEMENS AKTIENGESELLSCHAFT, 80333 München (DE)
(72) Erfinder: HUBER, Ulrich, 80796 München (DE)
(86) Internationale Anmeldenummer: PCT/DE2001/002907
(87) Internationale Veröffentlichungsnummer: WO 2002/011053

(56) Entgegenhaltungen:
- EP-A- 0 926 769
- DE-C- 19 709 231
- FR-A- 2 709 850

## Beschreibung

Die Erfindung betrifft ein Gerät mit einem Gehäuse und mit einer im Gehäuse angeordneten Leiterplatte und einer mittels einer Kontaktfeder mit der Leiterplatte elektrisch verbundenen, aus dem Gehäuse entnehmbaren Chipkarte.

Immer häufiger sind die verschiedensten elektronischen Geräte, insbesondere kleinere mobile Geräte, mit Chipkarten ausgestattet, welche entweder dazu dienen, den Benutzer zu authorisieren oder aber als zusätzliches Speicher- und/oder Programmmedium verwendet werden. Beispiele hierfür sind die in den Mobiltelefonen verwendeten SIM-Cards, sogenannte Smart-Cards oder auch MMC's (Multi Media Cards), bei denen es sich im Wesentlichen um Speicherkarten handelt, welche in Audio- oder Video-Geräten, beispielsweise Kameras, dazu dienen, Audio- oder Videodaten in größeren Mengen zu speichern. Üblicherweise erfolgt der Kontakt zwischen der Leiterplatte und der Kontaktfläche der Chipkarte über sogenannte Kontaktfedern, das heißt, in Form einer Druckkontaktierung. Bei der Kontaktfeder handelt es sich um einen geeignet gebogenen, an der Leiterplatte befestigten Draht oder Blechstreifen, welcher im eingebauten Zustand der Chipkarte aufgrund der federeigenen Spannung gegen eine Kontaktfläche der Chipkarte drückt. Unter dem Begriff Chipkarte sind im Folgenden insofern alle derartigen wechselbaren Speicher- und/oder Programmmedien mit entsprechenden Kontaktflächen zu verstehen.

In vielen Fällen weisen derartige Geräte nur eine Chipkarte auf, sie können aber auch mehrere Chipkarten, beispielsweise für unterschiedliche Verwendungszwecke, aufweisen. Ebenso können entsprechend der Art der Chipkarte mehrere parallele Kontakte zwischen der Leiterplatte und Kontaktflächen der Chipkarte über mehrere Kontaktfedern bestehen. Es versteht sich von selbst, dass derartige Geräte ebenfalls von der im Folgenden beschriebenen Erfindung umfasst sind.

Bisher wird für die Kontaktierung zwischen Chipkarte und Leiterplatte eine Anordnung gewählt, bei der sich die Kontaktfeder räumlich zwischen der Leiterplatte und der Chipkarte befindet. Das heißt, die Chipkarte befindet sich in einem größeren Abstand parallel zur Leiterplatte und wird im Gehäuse in entsprechenden Führungen gehalten. Die Chipkarte ist hierbei so zur Leiterplatte angeordnet, dass die Kontaktflächen der Chipkarte in Richtung Leiterplatte weisen. Der Abstand zwischen der Leiterplatte und der Chipkarte wird von der Kontaktfeder überbrückt. Damit bestimmt die Kontaktfeder, bzw. ein aus mehreren Kontaktfedern bestehender Kontaktsatz, mit seiner Bauhöhe den Abstand zwischen Leiterplatte und Chipkarte. Das Volumen zwischen der Leiterplatte und der Chipkarte ist nur schwer nutzbar und führt zu einem erheblichen Verbrauch an umbautem Volumen. Die Bauhöhe des Kontaktsatzes ist somit ein Faktor, der im besonderen Maße die Gerätegröße mitbestimmt. Dies läuft der gewünschten weiteren Miniaturisierung, insbesondere von mobilen Handheld-Geräten wie Mobilfunkgeräten oder PDA's, zuwider.

Aus der US 4,675,516 A1 ist ein Kartenleser für elektronische Speicherkarten bekannt, bei dem eine Speicherkarte gegen eine Wand abgestützt ist und auf ihrer, der Wand abgewandten Seite, Kontaktflächen aufweist. Diese Kontaktflächen werden von Kontaktfedern kontaktiert, die durch eine Aussparung in einem isolierenden, plattenförmigen Element verlaufen. Die Kontaktfedern stellen eine elektrische Verbindung zwischen den Kontaktflächen auf der Speicherkarte und einer elektronischen Verarbeitungseinrichtung her. Dabei befindet sich das plattenförmige Element in einem erheblichen Abstand zu der Speicherkarte, so dass auch hier der Nachteil vorliegt, dass ein erhebliches Volumen aufgrund des Verlaufs der Kontaktfedern benötigt wird.

Es ist daher Aufgabe der vorliegenden Erfindung, eine Alternative zu diesem Stand der Technik zu schaffen, welche bei sicherer und kostengünstig herstellbarer Kontaktierung zwischen Chipkarte und Leiterplatte eine weitere Miniaturisierung des Gesamtgeräts ermöglicht.

Diese Aufgabe wird dadurch gelöst, dass die Leiterplatte und die Chipkarte mit jeweils einer Seitenfläche unmittelbar aufeinander oder eng beabstandet zueinander liegen und die Kontaktfeder zumindest in einem Abschnitt entlang ihres Federwegs zwischen der Leiterplatte und der Chipkarte in einer Aussparung in einer Gehäusewand verläuft. Hierbei ist unter dem Begriff "zwischen" nicht die räumliche Anordnung zwischen Leiterplatte und Chipkarte sondern allgemein der Leitungsweg zwischen den Kontaktstellen auf der Leiterplatte und der Chipkarte zu verstehen.

Erfindungsgemäß wird auf diese Weise das Volumen zwischen Leiterplatte und Chipkarte nahezu vollständig eingespart. Der Federweg der Kontaktfeder bzw. der Kontaktfedern wird platzsparend in einer speziell in einer Gehäusewand eingebrachten Aussparung "versteckt", d. h. die Kontaktfeder wird auf zumindest einem wesentlichen Teil ihres Federweges in das Gehäuse integriert.

Bei einem besonders bevorzugten Ausführungsbeispiel ist das Gerät so aufgebaut, dass die Kontaktfeder von der Leiterplatte aus die Chipkarte an einer Kante umgreift und die Chipkarte auf der von der Leiterplatte abgewandten Vorderseite kontaktiert. Dabei verläuft die Kontaktfeder zumindest entlang eines Abschnittes, auf welchem die Kontaktfeder die Kante der Chipkarte umgreift und/oder entlang der zur Leiterplatte abgewandten Seite der Chipkarte verläuft, in einer Aussparung in einer Gehäusewand. Hierbei kann die Kontaktfeder entweder so gebogen sein, dass sie von der Leiterplatte aus von einer Seite zur anderen Seite der Chipkarte um die Kante der Chipkarte herum gebogen ist. Die Kontaktfeder kann jedoch auch in einem Kontaktfederblock oder dgl. befestigt sein, welcher sich zum Beispiel auf der Leiterplatte entlang einer Kante der Chipkarte erstreckt und die Kontaktfeder bzw. die einzelnen Kontaktfedern des Kontaktfederblocks verlaufen vom Kontaktfederblock aus im Wesentlichen parallel zur Chipkarte entlang der zur Leiterplatte abgewandten Seite der Chipkarte. Insoweit ist ein gegebenenfalls vorhandener Kontaktfederblock Bestandteil der Kontaktfeder.

Bei diesem ersten Ausführungsbeispiel liegt folglich anders als bei den bisher bekannten Kontaktierungen die Chipkarte mit der Rückseite direkt auf oder knapp oberhalb der Leiterplatte. Das heißt, die Chipkarte wird umgedreht eingesetzt.

Die Aussparungen werden hierbei in der Gehäusewand eingebracht, wobei diese Aussparungen entweder ausgefräst werden können oder bei einem Spritzen der Gehäusewand gleich mit eingeformt werden können. Diese Ausführungsform ist daher relativ kostengünstig herstellbar. Bei der üblichen Unterbringung einer Chipkarte in einem Chipkartenraum an der Rückseite eines Mobilfunkgeräts müssen folglich nur entsprechende Aussparungen in die Unterschale des Geräts eingebracht werden.

Bei einem zweiten bevorzugten Ausführungsbeispiel verläuft die Kontaktfeder von der von der Chipkarte abgewandten Seite aus zumindest in einem Abschnitt in einer von einer Seite der Leiterplatte zur anderen Seite der Leiterplatte durchgehenden Aussparung in der Leiterplatte und kontaktiert die Chipkarte auf der der Leiterplatte zugewandten Vorderseite. Das heißt, die Aussparung bildet hier eine Durchbrechung der Leiterplatte. Spezielle Aussparungen in der Gehäusewand werden nicht gebraucht. Allerdings geht bei dieser Version Platz auf und in der Leiterplatte selbst verloren.

Die Aussparung ist vorzugsweise eine längs des Abschnitts der Kontaktfeder verlaufende Nut bzw. ein durchgehender Schlitz. Bei mehreren parallel zueinander verlaufenden Kontaktfedern bestehen verschiedene Möglichkeiten.

Bei einem bevorzugten Ausführungsbeispiel verlaufen die Kontaktfedern jeweils in separaten Nuten oder separaten Schlitzen nebeneinander. Insbesondere bei einer Unterbringung der Nuten bzw. Aussparungen im Gehäuse, beispielsweise gemäß dem oben genannten ersten bevorzugten Ausführungsbeispiel, hat dies den Vorteil, dass die Aussparungen selber jeweils nur relativ klein sind und die Festigkeit der Gehäusewand nicht beeinträchtigen.

Alternativ können natürlich auch mehrere der Kontaktfedern in einer gemeinsamen Aussparung parallel verlaufen. Diese Ausführungsform ist von der Herstellung her kostengünstiger und ist insbesondere dann angezeigt, wenn die Gehäusewand ohnehin dick genug ist oder aus einem Material besteht, sodass größere Aussparungen ohne Stabilitätsbeeinträchtigungen erlaubt sind.

Die Erfindung wird im Folgenden unter Hinweis auf die beigefügten Zeichnungen anhand von Ausführungsbeispielen näher erläutert. Die dort dargestellten Merkmale und die bereits oben beschriebenen Merkmale können nicht nur in den genannten Kombinationen, sondern auch einzeln oder in anderen Kombinationen erfindungswesentlich sein. Es stellen dar:
Figur 1 einen schematischen Teil-Längsschnitt durch eine im kurzen Abstand unterhalb einer Gehäusewand des Gerätes angeordneten Leiterplatte und einer zwischen Gehäusewand und Leiterplatte eingebrachten Chipkarte;
Figur 2 eine Draufsicht auf die Anordnung gemäß Figur 1 von der Gehäusewandseite aus;
Figur 3 eine perspektivische Ansicht einer Leiterplatte mit einer darauf angeordneten Chipkarte und einen mehrere Kontaktfedern aufweisenden Kontaktsatz;
Figur 4 einen schematischen Teil-Querschnitt durch eine Leiterplatte, einer darauf angeordneten Chipkarte und einer darüber befindlichen Gehäusewand mit einzelnen Nuten für mehrere parallel laufende Kontaktfedern;
Figur 5 einen schematischen Teil-Querschnitt wie in Figur 4, jedoch mit einer gemeinsamen breiteren Aussparungen in der Gehäusewand für mehrere parallel laufende Kontaktfedern;
Figur 6 eine schematische Darstellung der Anordnung zweier parallel nebeneinander angeordneter Chipkarten auf einer Leiterplatte;
Figur 7 eine schematische Darstellung der Anordnung einer Chipkarte auf einer Leiterplatte mit Arretierung der Chipkarte;
Figur 8 einen schematischen Teil-Längsschnitt wie in Figur 1, jedoch mit einer durch eine Aussparung in der Leiterplatte verlaufenden Kontaktfeder.

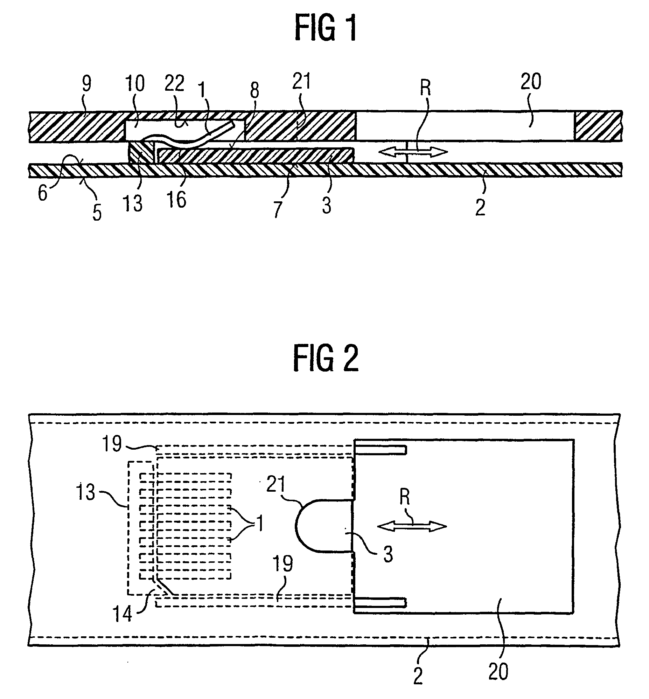

In Figur 1 ist schematisch ein typischer Einbau einer Chipkarte 3 in ein Gerät gemäß einem ersten erfindungsgemäßen Ausführungsbeispiel dargestellt. Hierbei befindet sich die Leiterplatte 2 des Geräts in einem relativ kurzen Abstand unterhalb einer Gehäusewand 9, hier der Unterschale eines üblichen Mobilfunkgeräts. Die Chipkarte 3 liegt mit ihrer Rückseite 7 unmittelbar auf der zur Gehäusewand 9 weisenden Oberseite 6 der Leiterplatte 2.

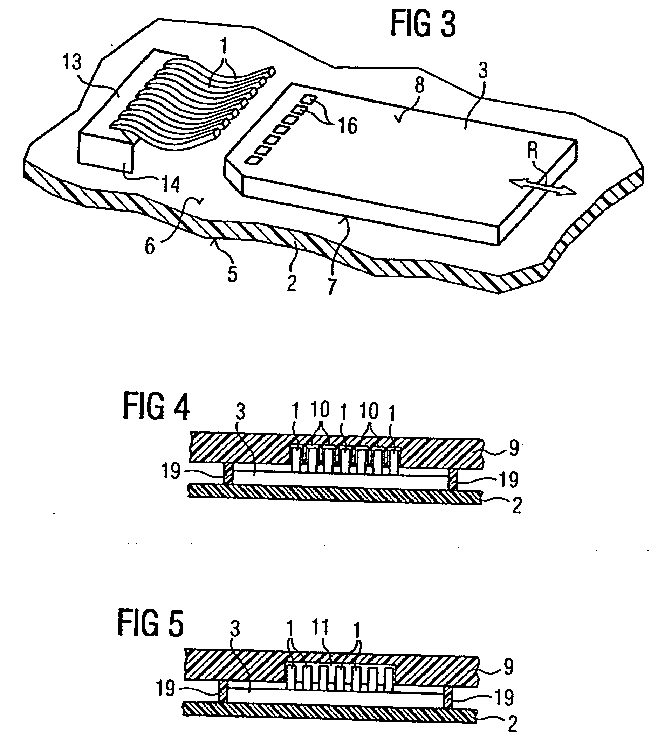

Auf dieser Oberseite 6 ist an einer Kante der Chipkarte 3 ein Kontaktfederblock 13 angeordnet, welcher mehrere Kontaktfedern 1 aufweist (Fig. 3). Die Kontaktfedern 1 (einschließlich des Kontaktfederblocks 13) greifen dabei von der Leiterplatte 2 aus gesehen um die Kante der Chipkarte 3 herum.

Im Bereich der Kontaktfedern 1 befinden sich in der Gehäusewand 9 Aussparungen 10, in welcher die Kontaktfedern 1 versteckt verlaufen.

Auf der der Leiterplatte 2 abgewandten Vorderseite 8 der Chipkarte 3 befinden sich die Kontaktflächen 16. Die einzelnen Kontaktfedern 1 sind so gebogen, dass sie vom Kontaktfederblock 13 zunächst bogenförmig in Richtung der Chipkarte 3 verlaufen und an ihrer tiefsten Stelle auf die Kontaktflächen 16 drücken und anschließend wieder Richtung Gehäusewand 9 von der Chipkarte 3 weg verlaufen. An ihrem freien Ende stoßen die Kontaktfedern 1 jeweils gegen den Grund 22 der Aussparung 10 in der Gehäusewand 9. Dieses Andrücken der Kontaktfederenden gegen den Aussparungsgrund 22 sorgt für eine definierte Andruckkraft der Kontaktfedern 1 auf die jeweilige Kontaktfläche 16 der Chipkarte 3.

Die gesamte Anordnung ist in Figur 2 noch einmal von oben dargestellt.

Wie in den Figuren 1 und 2 gut zu sehen ist, kann die Chipkarte 3 aus dem Gerät entnommen werden, in dem die Chipkarte 3 in Richtung des Pfeils R vom Kontaktfederblock 13 weg auf der Leiterplatte 2 unter eine Entnahmeöffnung 20 in der Gehäusewand 9 verschoben wird. Hierzu weist die Gehäusewand eine an die Entnahmeöffnung 20 angrenzende Auswerferöffnung 21 auf, durch die der Benutzer mit einem Finger auf die Chipkarte 3 drücken kann, um die Chipkarte zu verschieben.

Das Einschieben der Chipkarte 3 erfolgt auf umgekehrten Wege, indem die Chipkarte 3 in die Entnahmeöffnung 20 auf die Leiterplatte 2 aufgelegt wird und unter die Kontaktfedern 1 geschoben wird. Zur richtigen Positionierung der Chipkarte befinden sich seitlich von der Chipkarte jeweils Führungskanten 19, die entweder auf der Leiterplatte 2 oder an der Gehäusewand 9 angeordnet sind. Außerdem weist der Kontaktfederblock 13 eine Positionierungsecke 14 auf, welche an einen Eckenabschnitt der Chipkarte 3 angepasst ist, sodass die Chipkarte 3 nur mit der richtigen Orientierung in das Gehäuse des Geräts eingesetzt werden kann.

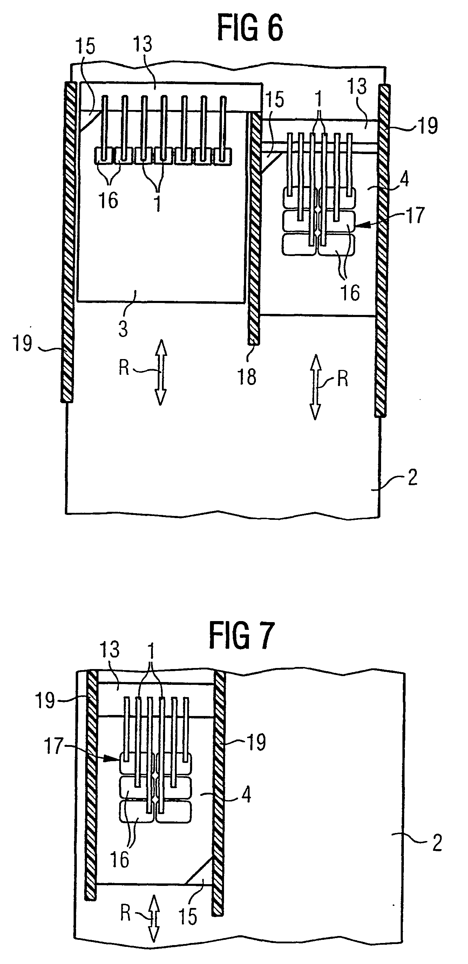

In den Ausführungsbeispielen gemäß Figuren 2 und 3 ist diese Positionierungsecke 14 direkt in den Kontaktfederblock 13 integriert. Selbstverständlich ist es aber, wie in den Figuren 6 und 7 dargestellt, auch möglich, die Positionierungsecke 15 separat auf der Leiterplatte 2 oder an der Gehäusewand 9 anzuordnen.

In den Figuren 4 und 5 ist jeweils ein Querschnitt durch den Aufbau gemäß Figur 1 in Höhe der Kontaktfedern 1 dargestellt.

Figur 4 zeigt hierbei ein Ausführungsbeispiel, bei dem sich die Kontaktfedern 1 in einzelnen, parallel in der Gehäusewand 9 angeordneten Nuten 10 befinden. Figur 5 zeigt eine Variante mit einer größeren breiteren Aussparung 11, in der alle Kontaktfedern 1 gemeinsam nebeneinander verlaufen. Die Version gemäß Figur 4 ist etwas aufwendiger in der Herstellung als die Version gemäß Figur 5. Aufgrund der geringeren Größe der Aussparungen 10 wird hierdurch aber die Unterschreitung der üblichen Wandstärke im Bereich der Nuten 10 ohne jede Einbuße der mechanischen Stabilität der Gehäusewand 9 möglich sein. Die Version gemäß Figur 5 eignet sich insbesondere bei dickeren Gehäusewänden 9 oder Gehäusewänden 9 aus besonders stabilem Material, beispielsweise aus Metall, oder wenn das Material beim Spritzen des Gehäuses keine filigrane Struktur gemäß Figur 4 erlaubt.

Die Figuren 6 und 7 zeigen schematisch verschiedene Anordnungen der Chipkarte bzw. mehrerer Chipkarten nebeneinander auf einer Leiterplatte 2.

In Figur 6 sind zwei verschiedene Chipkarte 3, 4, nämlich eine MMC 3 und eine SIM-Card 4, nebeneinander auf der Leiterplatte 2 angeordnet. Die beiden Chipkarten 3, 4 sind jeweils wiederum von der dem Kontaktfederblock 13 gegenüberliegenden Seite der Chipkarte 3, 4 aus in Pfeilrichtung R unter die Kontaktfedern 1 schiebbar bzw. herausziehbar. Die Führung der beiden Chipkarten 3, 4 erfolgt jeweils durch eine an der Außenkante befindliche Führungskante 19 und durch einen mittleren Führungssteg 18, welcher die beiden Chipkarten 3, 4 voneinander trennt. Zur richtigen Orientierung der Chipkarten 3, 4 befinden sich im Bereich der Kontaktfederblöcke 13 jeweils wiederum Positionierungsecken 15, die in entsprechende Eckenabschnitte der Chipkarten 3, 4 eingreifen.

Wie in Figur 6 dargestellt, können mit der erfindungsgemäßen Methode sowohl MMC's 3 mit mehreren parallel nebeneinander angeordneten Kontaktflächen 16 als auch die üblichen SIM-Cards mit einem Kontaktflächenfeld 17, bestehend aus mehreren in Spalten und Reihen nebeneinander angeordneten Kontaktflächen 16, kontaktiert werden.

Figur 7 zeigt eine Variante, bei der die Positionierungsecke 15 gleichzeitig zur Arretierung der Chipkarte , hier einer SIM-Card 4 dient. Hierbei ist die Positionierungsecke 15 federnd auf bzw. in der Leiterplatte 2 gelagert und kann zum Einschieben der Chipkarte 4 heruntergedrückt werden. Sobald die Chipkarte 4 richtig positioniert eingesetzt ist, wird die Positionierungsecke 15 durch die Federkraft wieder nach oben gedrückt und hält die Chipkarte 4 in ihrer Position.

Mit der hier beschriebenen Erfindung ist eine besonders kompakte Kontaktierung zwischen Leiterplatte und Chipkarte möglich, die besonders gut größenoptimiert in ein Gerät integriert werden kann. Durch die Integrierung der Kontaktfedern in die Gehäusewand oder die Leiterplatte kann das umbaute Volumen wesentlich reduziert und somit das Gerät weiter miniaturisiert werden.

## Patentansprüche

1. Gerät mit einem Gehäuse und mit einer im Gehäuse angeordneten Leiterplatte (2) und einer mittels einer Kontaktfeder (1) mit der Leiterplatte (2) elektrisch verbundenen, aus dem Gehäuse entnehmbaren Chipkarte (3, 4), **dadurch gekennzeichnet, dass** die Leiterplatte (2) und die Chipkarte (3, 4) mit jeweils einer Seitenfläche (6, 7, 8) unmittelbar aufeinander oder eng beabstandet zueinander liegen und die Kontaktfeder (1) zumindest in einem Abschnitt entlang ihres Federwegs zwischen der Leiterplatte und der Chipkarte in einer Aussparung (10, 11, 12) in einer Gehäusewand (9) verläuft.

2. Gerät nach Anspruch 1, **dadurch gekennzeichnet, dass** die Kontaktfeder (1) von der Leiterplatte (2) aus die Chipkarte (3, 4) an einer Kante umgreift und die Chipkarte (3, 4) auf einer von der Leiterplatte (2) abgewandten Seite (8) kontaktiert und dass die Kontaktfeder (1) zumindest entlang eines Abschnitts, auf dem die Kontaktfeder (1) die Kante der Chipkarte (3, 4) umgreift und/oder entlang der zur Leiterplatte (2) abgewandten Seite (8) der Chipkarte (3, 4) verläuft, in einer Aussparung (10, 11) in einer Gehäusewand (9) verläuft.

3. Gerät nach Anspruch 1, **dadurch gekennzeichnet, dass** die Kontaktfeder (1) von der von der Chipkarte (3) abgewandten'Seite (5) der Leiterplatte (2) aus zumindest in einem Abschnitt in einer eine Durchbrechung (12) bildenden, von einer Seite (5) der Leiterplatte (2) zur anderen Seite (6) der Leiterplatte (2) durchgehenden Aussparung (12) in der Leiterplatte (2) verläuft und die Chipkarte (3) auf einer der Leiterplatte (2) zugewandten Seite (8) kontaktiert.

4. Gerät nach einem der Ansprüche 1 bis 3, **dadurch gekennzeichnet, dass** die Aussparung (10, 12) eine längs des Abschnitts der Kontaktfeder (1) verlaufende Nut (10) oder ein Schlitz (12) ist.

5. Gerät nach einem der Ansprüche 1 bis 4, **gekennzeichnet durch** mehrere parallel zueinander verlaufende Kontaktfedern (1).

6. Gerät nach Anspruch 5, **dadurch gekennzeichnet, dass** mehrere der Kontaktfedern (1) jeweils in einer separaten Nut (10) oder einem separaten Schlitz (12) verlaufen.

7. Gerät nach Anspruch 5 oder 6, **dadurch gekennzeichnet, dass** mehrere der Kontaktfedern (1) in einer gemeinsamen Aussparung (11) parallel verlaufen.

8. Gerät nach einem der Ansprüche 1 bis 7, **dadurch gekennzeichnet, dass** das Gerät ein mobiles Handheld-Gerät ist.

9. Gerät nach Anspruch 8, **dadurch gekennzeichnet, dass** das Gerät ein Mobilfunkgerät ist.

10. Gerät nach einem der Ansprüche 1 bis 9, **dadurch gekennzeichnet, dass** die Chipkarte eine SIM-Karte (4) oder eine MMC (3) ist.

## Claims

1. Device having a housing, having a printed circuit board (2) which is arranged in the housing, and having a smart card (3, 4) which is electrically connected to the printed circuit board (2) by means of a contact spring (1) and can be removed from the housing, **characterized in that** one side surface (6, 7, 8) in each case of the printed circuit board (2) and of the smart card (3, 4) rest directly on one another or lie at a short distance from one another, and, at least in a section along its spring movement between the printed circuit board and the smart card, the contact spring (1) runs in a cutout (10, 11, 12) in one housing wall (9).

2. Device according to Claim 1, **characterized in that** the contact spring (1) engages, from the printed circuit board (2), around one edge of the smart card (3, 4), and makes contact with the smart card (3, 4) on a side (8) which faces away from the printed circuit board (2), and **in that** the contact spring (1) engages around the edge of the smart card (3, 4) at least along a section on which the contact spring (1) runs, and/or runs along that side (8) of the smart card (3, 4) which faces away from the printed circuit board (2), in a cutout (10, 11) in one housing wall (9).

3. Device according to Claim 1, **characterized in that** the contact spring (1) runs from that side (5) of the printed circuit board (2) which faces away from the smart card (3) at least in one section in a cutout (12), which forms an aperture (12) and passes through from one side (5) of the printed circuit board (2) to the other side (6) of the printed circuit board (2), in the printed circuit board (2), and makes contact with the smart card (3) on the side (8) which faces the printed circuit board (2).

4. Device according to one of Claims 1 to 3, **characterized in that** the cutout (10, 12) is a groove (10) or a slot (12) which runs along the section of the contact spring (1).

5. Device according to one of Claims 1 to 4, **characterized by** a number of contact springs (1) which run parallel to one another.

6. Device according to Claim 5, **characterized in that** a number of the contact springs (1) each run in a separate groove (10) or in a separate slot (12).

7. Device according to Claim 5 or 6, **characterized in that** a number of the contact springs (1) run parallel in a common cutout (11).

8. Device according to one of Claims 1 to 7, **characterized in that** the device is a mobile handheld device.

9. Device according to Claim 8, **characterized in that** the device is a mobile radio.

10. Device according to one of Claims 1 to 9, **characterized in that** the smart card is a SIM card (4) or an MMC (3).

## Revendications

1. Appareil comprenant un boîtier et une plaquette (2) à circuit imprimé disposée dans le boîtier et une carte (3, 4) à puce reliée électriquement à la plaquette (2) à circuit imprimé au moyen d'un ressort (1) de contact et pouvant être enlevée du boîtier, **caractérisé en ce que** la plaquette (2) à circuit imprimé et la carte (3, 4) à puce reposent l'une sur l'autre directement ou sont à une distance étroite l'une de l'autre par respectivement une surface (6, 7, 8) latérale et le ressort (1) de contact s'étend au moins dans une partie le long de sa course élastique entre la plaquette à circuit imprimé et la carte à puce dans un évidement (10, 11, 12) d'une paroi (9) de boîtier.

2. Appareil suivant la revendication 1, **caractérisé en ce que** le ressort (1) de contact enveloppe à partir de la plaquette (2) à circuit imprimé et est en contact avec la carte (3, 4) à puce sur une face (8) éloignée de la plaquette (2) à circuit imprimé, et **en ce que** le ressort (1) de contact s'étend, au moins le long d'un tronçon sur lequel le ressort (1) de contact enveloppe le bord de la carte (3, 4) à puce et/ou qui s'étend le long du côté (8), éloigné de la plaquette (2) à circuit imprimé, de la carte (3, 4) à puce, dans un évidement (10, 11) d'une paroi (9) du boîtier.

3. Appareil suivant la revendication 1, **caractérisé en ce que** le ressort (1) de contact s'étend depuis le côté (5), éloigné de la carte (3) à puce, de la plaquette (2) à circuit imprimé au moins dans un tronçon, dans un évidement (12) qui forme un passage (12) continu d'un côté (5) de la plaquette (2) à circuit imprimé à l'autre côté (6) de la plaquette (2) à circuit imprimé, et est en contact avec la carte (3) à puce d'un côté (8) éloigné de la plaquette (2) à circuit imprimé.

4. Appareil suivant l'une des revendications 1 à 3, **caractérisé en ce que** l'évidement (10, 12) est une rainure (10) ou une fente (12) s'étendant le long du tronçon du ressort (1) de contact.

5. Appareil suivant l'une des revendications 1 à 4, **caractérisé par** plusieurs ressorts (1) de contact parallèles entre eux.

6. Appareil suivant la revendication 5, **caractérisé en ce que** plusieurs des ressorts (1) de contact s'étendent respectivement dans une rainure (10) distincte ou dans une fente (12) distincte.

7. Appareil suivant la revendication 5 ou 6, **caractérisé en ce que** plusieurs des ressorts (1) de contact s'étendent parallèlement dans un évidement (11) commun.

8. Appareil suivant l'une des revendications 1 à 7, **caractérisé en ce que** l'appareil est un appareil portatif mobile.

9. Appareil suivant la revendication 8, **caractérisé en ce que** l'appareil est un téléphone mobile.

10. Appareil suivant l'une des revendications 1 à 9, **caractérisé en ce que** la carte à puce est une carte (4) SIM ou une MMC (3).
